# NEW EUROPEAN PATENT SPECIFICATION

(11) **EP 0 151 848 B2**
(45) Date of publication and mention of the opposition decision: **20.01.1993**
(45) Mention of the grant of the patent: 17.08.1988
(21) Application number: 84301262.6
(22) Date of filing: 27.02.1984
(51) Int. Cl.: B23K 26/08, B21C 37/08

(54) **An apparatus for butt welding steel strips by using a laser beam in a steel strip-processing line**
Vorrichtung zum Stumpfschweissen von Stahlbändern mit einem Laserstrahl in einer Stahlbandverarbeitungsstrasse
Dispositif pour le soudage bout à bout de feuillards d'acier utilisant un faisceau laser dans une voie de traitement de feuillards d'acier

(43) Date of publication of application: 21.08.1985
(73) Proprietor: KAWASAKI STEEL CORPORATION, Chuo-Ku, Kobe-City Hyogo 651 (JP)
(72) Inventor: Taniguchi, Shigeki Chiba Works, Chiba City (JP); Furukawa, Kusuo Tokyo Head Office, Chiyoda-Ku Tokyo (JP); Yanagishima, Fumiya Chiba Works, Chiba City (JP); Sasaki, Hiroaki Research Laboratories, Chiba City (JP)
(74) Representative: Overbury, Richard Douglas

(56) References cited:
- AT-B- 333 100
- DE-A- 1 216 073
- DE-A- 2 009 532
- DE-A- 3 044 350
- DE-A- 3 203 287
- DE-B- 2 350 933
- DE-B- 2 949 095
- JP-A-57 171 590
- JP-U-57 111 485
- US-A- 3 394 857
- PATENT ABSTRACTS OF JAPAN, vol. 7, no. 12, 19th January 1983 & JP-A-57 168796 (KAWASAKI SEITETSU K.K.) 18-10-1982
- PATENT ABSTRACTS OF JAPAN, vol. 6, no. 48, 27th March 1982 & JP-A-56 163087 (KAWASAKI SEITETSU K.K.) 15-12-1981
- PATENT ABSTRACTS OF JAPAN, vol. 5, no. 97, 24th June 1981 & JP-A-56 41091 (TOKYO SHIBAURA DENKI K.K.) 17-04-1981
- Brochure: "Kontinumat"; Messer Griesheim
- Brochure: "Hochleistungs-CO2-Gas-Laser Eurolas 1000"; Messer Griesheim
- "Laser schweisst endloses Band", Werkstatt und Betrieb, 116, 1983, page 659
- Lexikon der Hüttentechnik, volume 5, 1963, page 307
- Contract extract concerning the delivery of a strip welding apparatus to Avesta AB

## Description

The present invention relates to an apparatus for butt welding steel strips by means of a laser beam (hereinafter referred to as "laser butt welding apparatus") in a steel strip-processing line.

In a steel strip processing line, steel strips are joined together at an entry section of the line, and fed to a later processing stage so that they are continuously treated and produced. The steel strips have been conventionally joined by a seam welding machine, a flash but welding machine, or an arc welding machine such as a TIG arc welding machine. These welding methods have their own peculiar characteristics respectively. Seam welding is characterized in that the welding is possible at a high speed in a short time, but the thickness of the welded portion becomes 180-130% of that of the base metal because the steel strips are welded by piling their edges one upon another. Therefore, the welded portion can not be rolled in a coil when taking problems such as buckling into account. If a scale is present on the surface of the steel strip as is the case of a hot-rolled steel strip or the like, this method has the defect that the surface must be ground prior to the welding. Further, in the case of the welding of thin steel strips, since the strips are pressed by means of electrode wheels, this method has the drawback that the profile at the junction and the vicinity thereof are deteriorated.

The flask butt welding can make the welding time shorter than seam welding because the steel strips are welded at one time over their whole width in the former method, but thin steel strips are likely to be bent due to the upsetting step, so that this method has the defect that it is applicable to relatively thick steel strips or not less than 1.6 mm, but not applicable to thin steel strips. It also has the defect that it is inapplicable to special steels such as silicon steel, stainless steel, and high carbon steel because of oxidation, the large heat input, and the coarse grain growth at the welded portion and the heat affected zone when flashing is effected. As a result, the use of flash butt welding is generally restricted to the welding of low carbon steel strips of not less than 1.6 mm in thickness.

According to TIG arc welding, it is possible to improve the quality of the welded portion through the addition of a filler wire or the like, and therefore, this method can be used for stainless steel. However, since the heat input is large, it has the defect that it is inapplicable to material such as silicon steel in which coarse grains are likely to grow. Further, it also has the defects that the welding speed is slow, and the welding time is long.

As mentioned above, although the conventional seam welding, flash butt welding, TIG arc welding and the like have been used because of their respective characteristics, they can not be applied to silicon steel or the like. Thus, there has been a need for a welding apparatus which can weld the special steels such as silicon steel or the like.

An object of the present invention is to provide an automatic laser butt.welding apparatus for welding steel strips in a steel-processing line by using a laser beam as a heat source.

More specifically, the object of the invention is to provide a laser butt welding apparatus usable for welding almost all kinds of steels, for instance, special steels such as silicon steel, stainless steel or the like, plated steels such as galvanized steel or the like, and high tensile strength steels.

It is another object of the invention to provide a laser butt welding apparatus usable for conventional steel strips of from small to large thickness without limiting the thickness as in the case of flash butt welding.

It is a further object of the invention to provide a laser butt welding apparatus which enables a far higher speed welding than TIG arc welding at high efficiency.

AT-B-333100 discloses an apparatus for joining together the tail edge of a preceding steel strip to the front edge of a trailing steel strip without the use of a filler wire which apparatus includes a clamp means for the end portion of the strips, a cutting means for cutting the end portions of the strips to form the front and tail edges, a means for butting the front and tail edges, and a means of welding the front and tail edges together. However the cutting means is a rotary shear arranged to cut the strips one after the other and there is no suggestion to effect the welding by means of a laser.

DE-B1-2949095 discloses a technique for joining together steel strips by laser welding. However, in this technique the end portions of the strips are spaced apart vertically prior to being cut by means of a laser. The upper strip is then moved so that its cut edge is in butting relationship with the cutting edge of the other strip and the butting edges are then welded by laser.

According to the present invention, there is provided a butt welding apparatus for joining together the tail edge of a preceding steel strip to the front edge of a trailing steel strip without the use of filler wire which apparatus comprises (i) a clamp means for the end portions of the steel strips and including an inlet clamp and an outlet clamp each having an upper clamp member and a lower clamp member, wherein the upper clamp members extend nearer to each other than the lower clamp members and wherein one of said inlet and outlet clamps is moveable forward and rearward along the strip feed line and the other is fixed in that direction, (ii) a cutting means positioned between the inlet and outlet clamps for cutting the end portions of the strips to form the front and tail edges and including a preceding steel strip shear and a trailing steel strip shear each having a lower shearing blade and an upper shearing blade, (iii) a means for butting the front and tail edges of the steel strips while being clamped by means of said clamp means, and (iv) a means of welding the front and tail edges together including a centre clamp adapted to clamp the butted front and tail edges of the steel strips in cooperation with the upper clamp members during welding
characterised in that
(a) the upper shearing blade and the lower shearing blade of each shear are advanceable and retractable in a direction perpendicular to the strip-feed line so as to simultaneously cut the end portions of the preceding and trailing steel strips to form said front and tail edges whilst the end portions of the preceding and trailing steel strips are held between the lower shearing blades and the upper clamp members, (b) tan a of the upper shearing blades, wherein a is the rake angle, is not more than
   ^{35 + 2.5t.} wherein t is the thickness (mm) of the steel strips, (c) said moveable clamp constitutes said means 1000 for butting the front and tail edges of the steel strips and is moveable along the strip-feed line whilst the centre clamp is arranged to clamp the front and tail edges during abutting in cooperation with the upper clamp members to prevent deformation of the front and tail edges, (d) the welding means includes a laser means comprising a laser oscillator placed off the strip-feed line, an optical system to direct and focus a laser beam irradiated from said laser oscillator on to the weld zone constituted by the butted front and tail edges, and a torch member for applying the laser beam and which is movable transversely of the steel strips, and (e) the optical system of the laser means is arranged to cause the laser beam to extend in a direction parallel to the steel strip-feed line at least once on its path to the weld zone from the laser oscillator.

The foregoing objects and other features and advantages of the invention will be well appreciated upon reading of the following description of the invention when considered in connection with the accompanying drawings with the understanding that some modifications, variations and changes could be easily made by persons skilled in the art to which the invention pertains without departing from the invention as defined by the appended claims.

For a better understanding of the invention and to show how the same may be carried into effect, reference will now be made, by way of example, to the accompanying drawings, in which:-
Fig. 1 is a schematic plan view of the whole laser butt welding apparatus to the present invention;
Fig. 2 is a side view of a clamp means and a cutting means in the laser butt welding apparatus of Fig. 1;
Fig. 3 is a front view of the laser butt welding apparatus of Fig. 1;
Fig. 4 is a detailed view illustrating the state in which a preceding steel strip and a trailing steel strip are clamped in the apparatus of Fig. 1.
Fig. 5 is a plan view of a station for checking the performances of an optical system for irradiating a laser beam onto a weld zone in the apparatus of Fig. 1;
Fig. 6(a) is a side view of the station for checking the performances of the optical system of Fig. 5;
Fig. 6(b) is a side view of another embodiment of the station for checking the performance of the optical system;
Fig. 7 is a side view showing the butting means of an inlet clamp of the apparatus of Fig. 1;
Fig. 8 is a plan view of the butting means of the inlet clamp as viewed from the direction of the arrow X-X in Fig. 7;
Fig. 9 is a sectional view as viewed from the direction of the arrow A-A in Fig. 8;
Fig. 10 is a sectional view as viewed from the direction of the arrow B-B in Fig. 9;
Figs. 11 (a) to 11(d) are other embodiments of the butting means;
Fig. 12 is a plan view of the laser torch of the apparatus of Fig. 1;
Fig. 13 is a side view of the laser torch of Fig. 12;
Fig. 14 is a side view of a center clamp of the apparatus of Fig. 1;
Fig. 15 is a detailed view of the center clamp of fig. 14;
Fig. 16 is a sectional view illustrating the state in which the preceding steel strip and the trailing steel strip are improperly butted with each other;
Figs. 17(a)-17(f) are views schematically illustrating the operation of the laser butt welding apparatus of Fig. 1;
Fig. 18 is a graph illustrating the relationship between the distance 1 from a tip of an upper clamp member to the side edge of the adjacent upper shearing blade of the apparatus of Fig. 1 and a value AG which is obtained by subtracting the minimum,value of the distance between the tail edge of the preceding steel strip and the front edge of the trailing steel strip along the line direction of said steel strip from the maximum value;
Fig. 19 is a schematic view illustrating the value AG in Fig. 18;
Fig. 20 is a graph illustrating the relation between tan a in which a is the rake angle of the shearing blade of the apparatus of Fig. 1, the value AG and the thickness of the steel strip;
Fig. 21 (a) and 21 (b) are views illustrating the operation of the butting means of the inlet clamp;
Fig. 22 is a schematic view illustrating a sectional profile of the welded portion formed when the center of the laser beam deviates from the butt line;
Figs. 23(a) and 23(b) are side and end views of another embodiment of the laser beam path construction in the laser torch of the apparatus of Fig. 1, respectively;
Figs. 24(a) and 24(b) are side and end views of still another embodiment of the laser beam path construction in the laser torch of the apparatus of Fig. 1; and
Figs. 25(a) and 25(b) are micrographs of the welded joints of silicon steel strips obtained by the laser butt welding of the present invention and TIG arc welding respectively.

The present invention will be explained in more detail with reference to the attached drawings below:

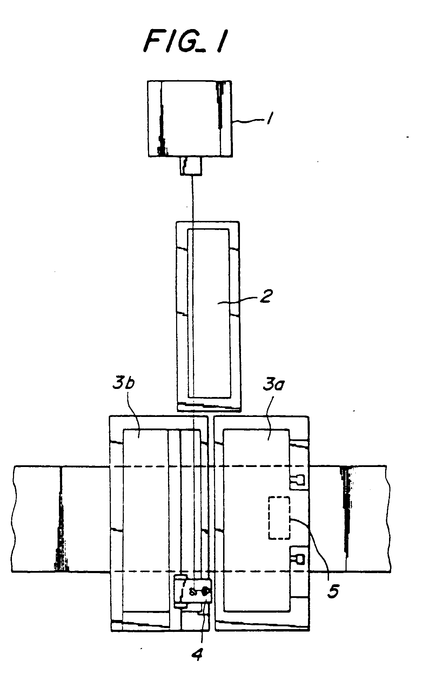

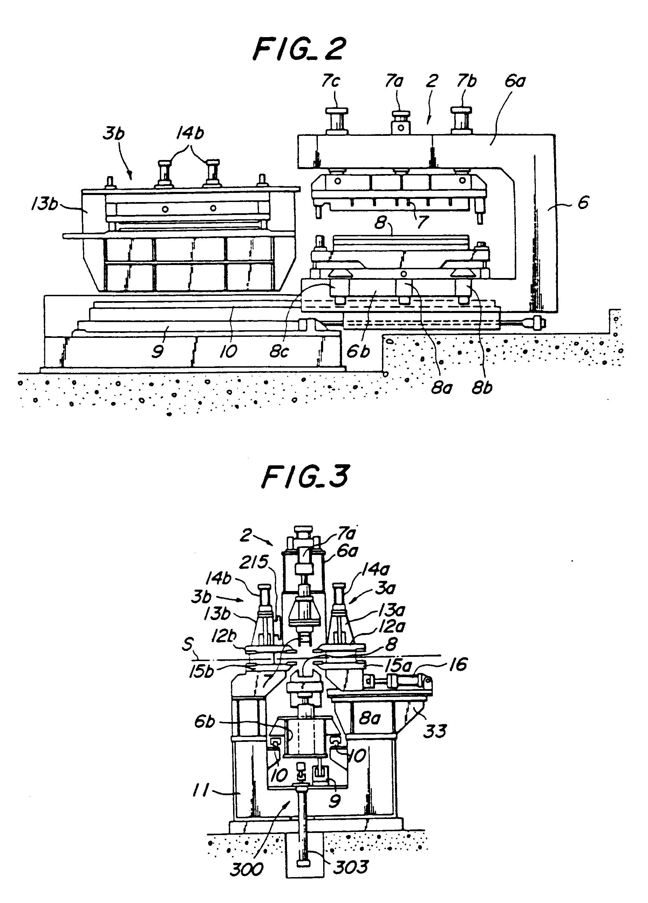

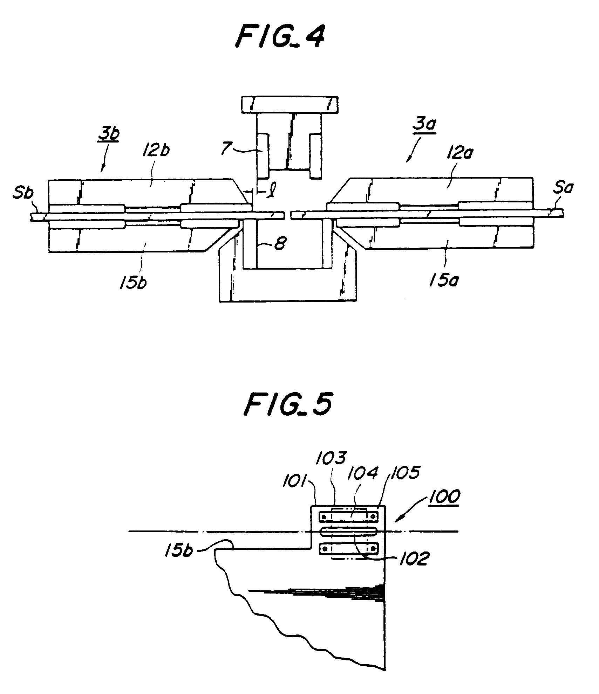

In Fig. 1, reference numerals 1, 2 and 3 are a laser oscillator, a cutting means in the form of a double blade shearing means, and a clamp means consisting of an inlet clamp 3a and an outlet clamp 3b, respectively. Reference numerals 4 and 5 are a laser torch and a butting means respectively. The double blade shearing means 2, the clamp means 3 and the butting means 5 will be explained referring to Figs. 2 and 3. Although the clamp means may be included in the butting means in view of its function, they are described as separate members in the following:

In Figs. 2 and 3, the double blade shearing means 2 has upper and lower shearing blades 7 and 8 mounted respectively on the upper and lower arms 6a and 6b of frame 6 having the shape of a letter C. The upper blades 7 and the lower blades 8 are independently movable upwards and downwards. More particularly the blades 7 are vertically movable by means of a cylinder 7a and guide rods 7b and 7c secured to the upper arm 6a and the lower blades 8 are vertically movable by means of a cylinder 8a and guide rods 8b and 8c secured on the lower arm 6b. Each upper blade 7 is provided with a rake angle in a transverse direction of the strip, which is selectively determined in such a range as to improve the shear-cut profile of the strips. The double blade shearing means 2 is so constituted that the C-letter shaped frame 6 can be advanced to and retracted from a position between the outlet clamp 3b and the inlet clamp 3a in a transverse direction of the steel strip while being guided by rails 10, by means of a drive means 9 (for instance, a cylinder). The inlet clamp 3a and the outlet clamp 3b are disposed on a stationary base 11 in opposite relationship to one another. The upper clamp members 12a and 12b of clamps 3a and 3b are both vertically movable with respect to the lower clamp members 15a and 15b, respectively of clamps 3a and 3b by means of cylinders 14a and 14b secured to upper frames 13a and 13b, so at to clamp or release the end portions of steel strips fed along the strip feed line. The inlet clamp 3a is movable in the strip feed line direction on a lower base 33 of the stationary base 11 by means of a drive means, for instance, a cylinder 16, so that the inlet clamp moves forwardly or rearwardly with respect to outlet clamp 3b. The outlet clamp 3b is fixed so as not to be displaceable in the strip-feed line direction.

Next, the clamp means is explained in more detail referring to Fig. 4. Top ends of the upper clamp members 12a and 12b of the inlet and outlet clamps 3a and 3b are extended a little nearer toward the shear-running line than those of the lower clamp members 15a and 15b, so that the steel strips Sa and Sb to be cut are clamped between the tips of the upper clamp members 12a, 12b and the lower blades 8.

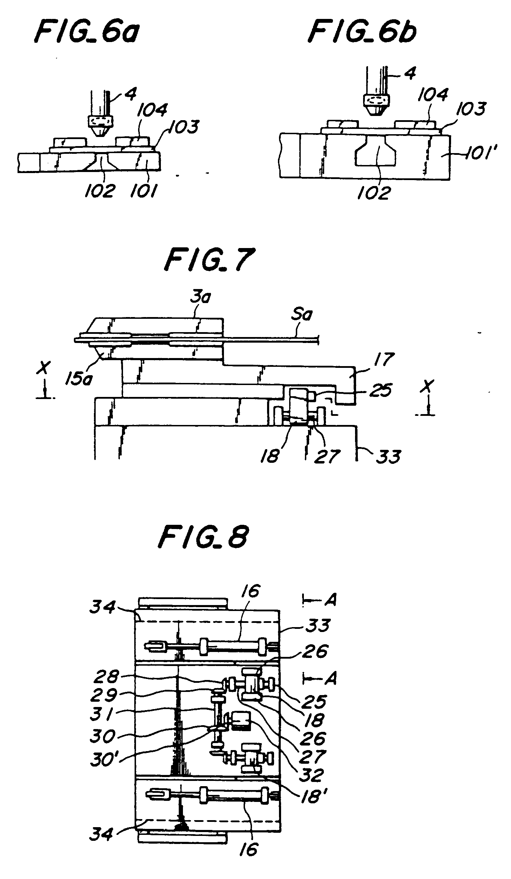

As shown in Figs. 5 and 6(a), (b), a station 100 for checking the performances of an optical system for irradiating a laser beam on the weld zone of the steel strips is provided at the lower clamp member 15b on an off-line i.e. at a location which is on an extension of the running path of the laser torch of the laser means 4.

Reference number 101 is a table having a slit 102 just under the laser torch. Numeral 103 is a sample plate which is secured to the table 101 by means of press plates 104 and bolts 105.

According to this embodiment, the table 101 is joined to ther lower clamp member 15b, but it may be supported by base 33.

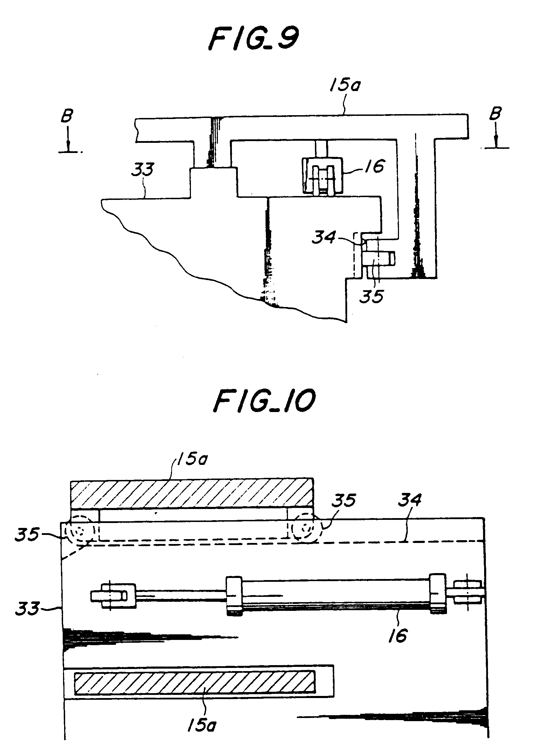

Referring next to Figs. 7-10, the butting means will be explained:-

The trailing steel strip is moved toward the preceding steel strip by actuating the cylinders 16, and is stopped by appropriate means. For instance, the forward movement of the trailing steel strip is stopped upon contacting the shear cut edge of the preceding steel strip. Alternatively, an arm 17 is provided under the inlet clamp 3a, while a stopper 18 is provided on the base plate 33, so that the trailing steel strip which is moved forwardly is stopped upon contact between the arm 17 and the stopper 18. In such a case, the stopper 18 may be spaced from the lower bent edge side of the arm 17 by a distance substantially equal to the gap between the shear cut edges of the steel strips, and may be designed in the form of a shock absorber.

Further, a pressure detector 25 such as a load cell is provided at the face of the stopper 18 which contacts the arm 17. The stopper 18 is adapted to be moved while being guided by guide means 26. That is, a screw shaft 27 is screwed into the lower portion of the stopper 18, and the screw shaft is adapted to be rotated for shifting the position of the stopper 18 by actuating the motor 32 via bevel gears 28 and 29, a shaft 31 and bevel gears 30 and 30'.

The bevel gears 28, 29, 30 and 30' comprise a stopper positioning system an it, and the shafts 27 and 31, are arranged on the lower base 33. With this construction it is possible to stop the trailing steel strip at a place slightly spaced from the shear cut edge of the preceding steel strip, and to gently butt the edge faces of the preceding and trailing steel strips by actuating the motor 32 from an output from the stopper or the like. As a matter of course, the motor is stopped in an appropriate way after the shear cut edges butt with each other.

To enable the inlet lower clamp member 15a to slide along the lower base 33, two wheels 35 fitted on the side portion of the inlet clamp 3a and positioning on the side of the outlet clamp 3b engage with the recessed top portion of a guide member 34 on the base 33 whereby the wheels 35 may be moved in the transverse direction of the steel strip and the steel strip clamped by the inlet clamp 3a may be slightly pivoted in a horizontal plane, whereby the cut edges of the steel strips to be joined can be pivoted in the plane of the strips so as to come into contact and reduce the gap between the butted portions.

In the above embodiment, two stoppers 18 are driven by means of a single motor 32, but as a matter of course, they may be driven independently by means of two motors.

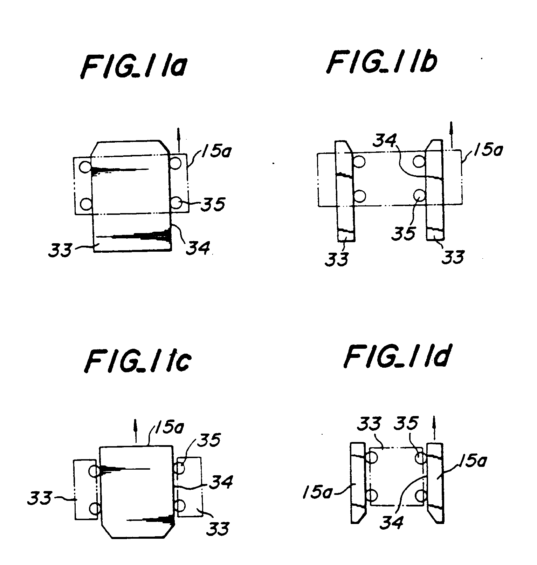

Some embodiments for attaining a buttHing means operating in the above way will be explained with reference to Fig. 11, a, b, c and d hereinafter.

In Fig. 11 a, reference number 33 is a fixed guide member provided on the base wherein the top portions of both sides of the member have recessed portions as shown in Fig. 11 a and two pairs of wheels 35 are provided on the side portions of the inlet lower clamp member 15a, so that the wheels run on the guide portions 34 of the guide member 33. When the forward pair of wheels 35 advance up to the recessed portions in this guide member, the inlet lower clamp member 15a may be slightly pivoted in the horizontal direction.

In Fig. 11 b, reference numeral 33 denotes two fixed guide members provided on the base, wherein the top portion of each member has a recessed portions as shown in this figure and the wheels 35 are provided on the side portions of the movable inlet lower clamp members and run on the guide members. When the forward pairof wheels 35 advance up to the recessed portions, the lower inlet clamp member 15a may be slightly pivoted in the horizontal direction as in the case of Fig. 11 a.

In Fig. 11c, reference numeral 33 denotes two fixed guide members provided on the base and reference numeral 15a denotes the supporting member of the movable inlet lower clamp member, wherein the rearward end portions have the recessed portions as shown in this figure. Two pair of wheels 35 are provided on the fixed guide members 33 and run on the supporting member. When the supporting member 15a of the movable inlet lower clamp member is moved forwardly and the recessed portions thereof reach the rearward wheels 35, the member 15a may be slightly pivoted in the horizontal direction as in the case of Fig. 11 a.

In Fig. 11d, reference numeral 33 denotes a fixed guide member provided on the base which is provided with two pair of wheels 35 which run on the movable supporting members 15a of the inlet lower clamp members, which have recessed portions at the rearward end portions as shown in this figure. When the movable supporting members are moved forwardly and the recessed portions of the supporting members reach the rearward wheels 35, the member 15a may be slightly pivoted in the horizontal direction as in the above described former cases.

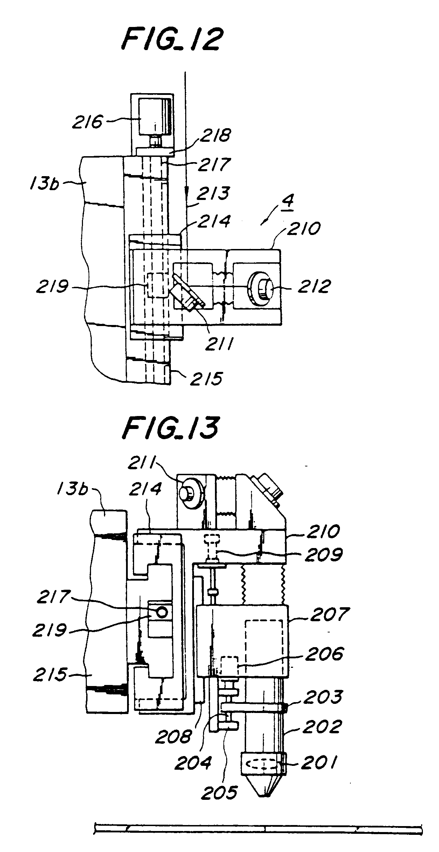

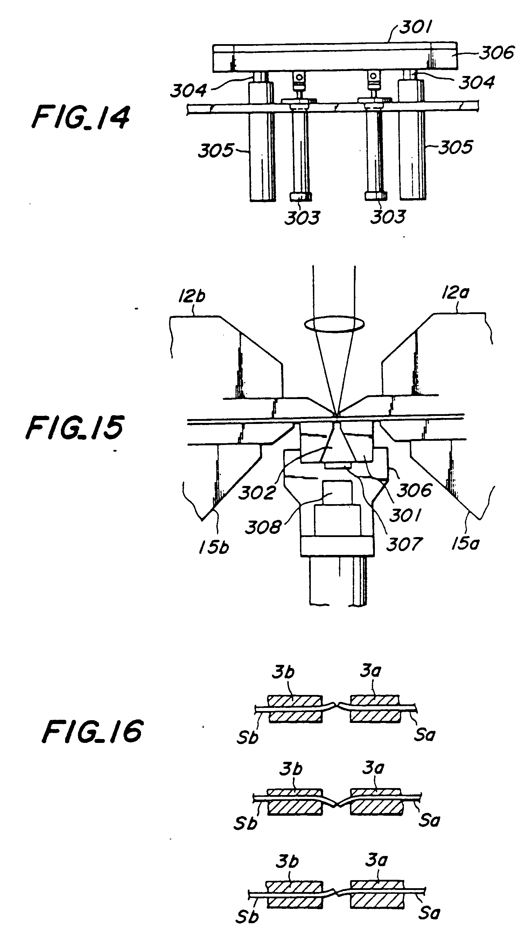

With reference to Figs. 12 and 13, the laser means 4 will be explained below.

Reference numeral 201 is a condenser which is attached to torch 202. Reference numeral 203 is a bracket attached to the torch 202 and engaged with the screw shaft 204 at its other end. The screw shaft 204 is supported by bearing 205 at both ends thereof and connected to a motor 206. Reference numeral 207 is a torch holder which is adapted to ascend and descend while being guided by a guide means 208. This torch holder 207 also serves to guide the ascending and descending of the torch 202. Acylinder 209 is attached to a reflector based 210 and is adapted to raise and lower the torch holder 207. Reference numerals 211 and 212 are reflector mirrors attached to the reflector base 210, and adapted to bend the laser beam to a desired direction. The reflector base 210 is guided by a carriage 214 and can be moved in a direction along the strip feed line perpendicular to the torch running path by a motor (not shown).

The carriage 214 is adapted to be moved in a direction perpendicular to the processing line by means of a guide means 215, a motor 216, a screw shaft 217 connected to the motor 216, bearings 218 of the screw shaft 217, and a nut 219 screwed to the screw shaft 217.

Centre clamp 300 will be explained with reference to Figs. 3, 14 and 15.

The center damp 300 is arranged at a side opposite to the laser torch at the butting portion of the preceding and trailing steel strips, and includes a backing bar 301 provided with a bag-like groove 302. The center clamp further comprises cylinders 303, guide rods 304 and guides 305, and is adapted to be contacted with or separated from the back face of the strips to be joined. Reference numerals 306, 307 and 308 are a backing bar supporting base, a light absorbing member, and a coolant passage respectively. The backing bar 301 is designed to have such a size that the ends of the preceding steel strip and the trailing steel strip are fully sandwiched between it and the upper clamp member 12a and 12b when elevated.

The bag-like groove 302 prevents the laser beam passed through the weld zone from reflecting and dispersing to the outside and further safety is assured by preventing the laser beam from leaking to the outside by the provision of the light absorbing member 307 on the face of the supporting base 306 onto which the laser beam is irradiated.

Further, since the end portions of the preceding and trailing steel strips are clamped between the upper clamp members 12a and 12b and the backing bar 301 during the butting, the deformation of the edge portions as shown in Fig. 1 b can be avoided.

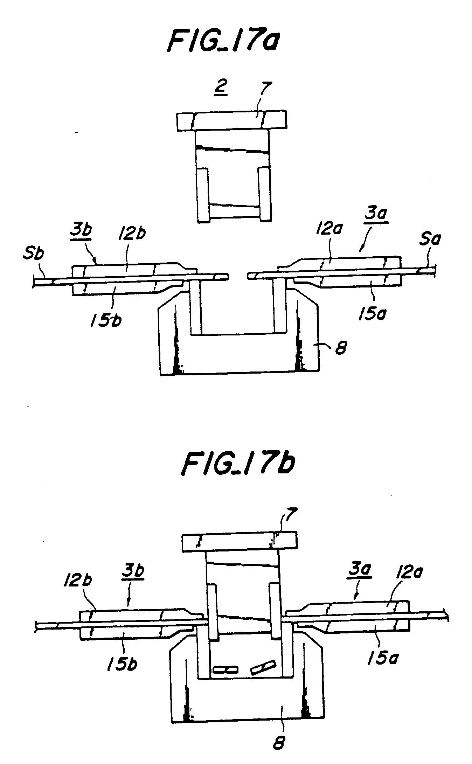

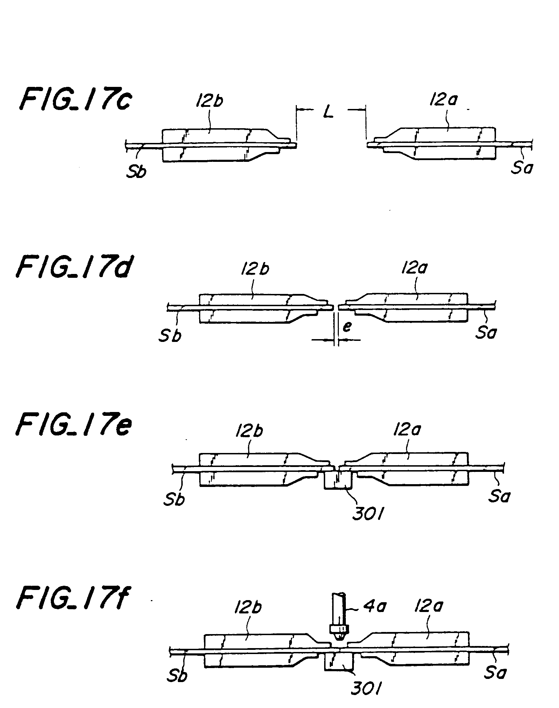

The operation of the apparatus according to the present invention will be explained with reference to Figs. 17(a)-(17(f);
(1) When the end portions of the preceding steel strip and the trailing steel strip are fed and stopped at predetermined locations, the cylinders 14a and 14b of the inlet and outlet clamps 3a and 3b are actuated to clamp the preceding steel strip and the trailing steel strip between the clamp means. Next, the clinder 8a is actuated to lift the lower blade 8 [Fig. 17(a)].
(2) The cylinder 7a is actuated to lower the upper blades 7 to cut the end portions of the preceding steel strip and the trailing steel strip [Fig. 17(b)].
(3) The cylinder 7a is reversely actuated to lift and retract the upper blades 7 and the cylinder 8a is actuated to lower the lower blade 8. Then, the cylinder 9 is actuated to move the shearing means 2 to a retracted position on the non-operation side [Fig. 17(c)].
(4) The cylinder 16 is actuated to advance the inlet clamp 3a, and when the front edge of the cut trailing steel strip approaches the tail edge of the cut preceding steel strip [Fig. 17(d)], cylinder 303 of center clamp 300 is actuated to clamp the steel strips between the upper clamp members 12a and 12b and the center clamp 300 [Fig. 17(e)]. Next, the inlet clamp is further advanced to complete the butting of the steel strips [Fig. 17(f)].

The front and tail edge portions of the steel strips are prevented from being deformed as shown in Fig. 16 by clamping them between the extended tip protions of the upper clamp member and the center clamp. Thus, an excellent welded joint is obtained.

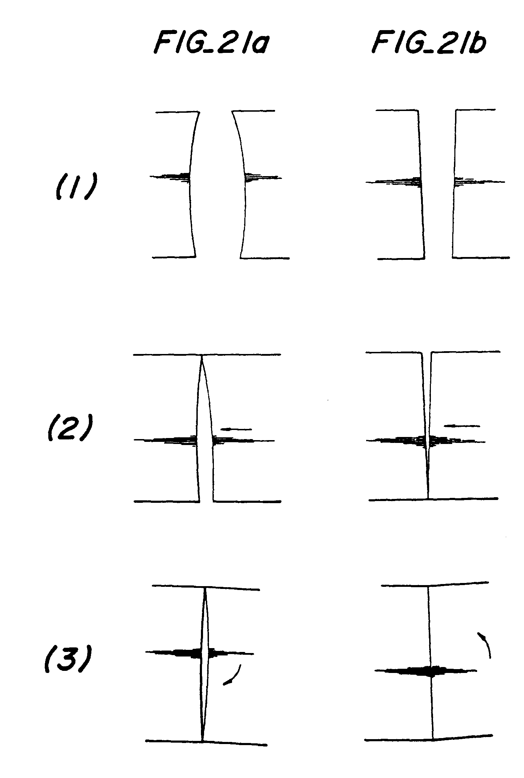

When the top portions of the advancing guides of the inlet clamp are tapered so as to allow the steel strip to be slightly pivoted in a horizontal plane and the position of the stopper which restrains the advance of the trailing steel strip is set to be slightly larger than the distance between the cut edges of the strip, the butting load is applied onto the edges of the steel strips and as a result, if the distance between the cut steel strips is different along the transverse direction of the steel strips, the inlet clamp may be pivoted as shown in Figs. 21 (a) and 21 (b) whereby the edges of the steel strips come into contact with each other so that the gap becomes smaller than the case where the butting- is carried out through advancing the cut steel strip by only the pre- dermined distance.

Consequently, joints having more stable and higher strength can be obtained.

Even if the distance between the edges of the cut strips varies a little, the steel strips are tightly butted with substantially no gap therebetween by setting the distance between the stopper 18 and the bent portion of the guide 17 slightly wider than the distance between the cut edges of the strips. Further, with respect to the deviation from a straight line of the cut edges, the gap can be made smaller by rotating the inlet clamp. Although the trailing steel strip is slightly inclined to the line owing to the pivotal movementofthe inlet clamp, this is around 0.1 mm/1,000 mm, and no problem is caused.

It is important for the gap to be as near to zero as possible in the case of laser butt welding.
(5) The motor 216 is actuated to drive the laser in the transverse direction of the steel strip. On the way, when a detector (not shown) detects the side edge of the strip, a shutter housed in the laser oscillator 1 is opened to irradiate the laser beam onto the side of the laser torch 4. The laser beam is bent in a direction parallel to the strip-feed line by means of the reflector 211, and is next bent in a direction vertical to the line by means of the reflector 212 and then passed through the condenser 201 to be focused onto the weld zone and to commence the welding. The laser torch is run along a path extending in the transverse direction of the strip, and the shutter is closed when the other strip side edge is sensed by means of the side edge detector to stop the irradiation of the laser beam. Then, the torch is carried to the retracted position and stopped.

Once the laser beam path has been changed so as to be parallel to the strip-feed line, the focused position of the laser beam path in the line direction after passing the reflector 212 can be varied merely by horizontally shifting the layer torch 4 in the line direction.

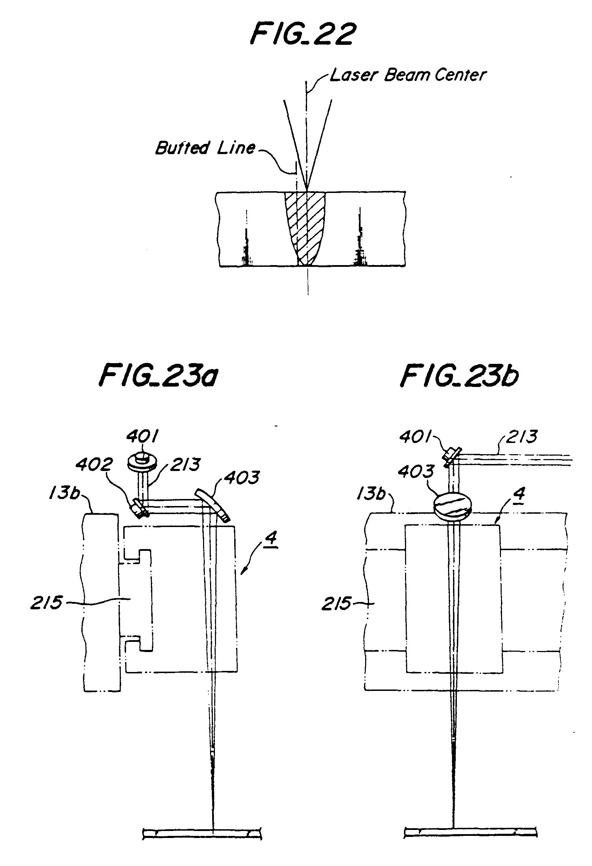

Particularly, the beam path may be slightly varied depending upon the ambient temperature, the leading period of time of the oscillator, the temperature of the reflector, and the like, and consequently there is the possibility that the beam point focused by the condenser is shifted slightly. The component of such a shift in the direction perpendicular to the strip-feed line causes no problem because it is in the weld line. However if the focus is shifted in a direction parallel to the strip-feed line, it deviates from the butting line to form a weld profile as shown in Fig. 22. Since this form of joint has a notch in its lower side, it is weak on bending and unacceptable. For this reason, it is extremely important to control the focus location in the direction parallel to the strip-feed line when using the laser butt welding apparatus. According to the laser butt welding apparatus of the invention, in order to facilitate the positioning of the focus in the strip-feed line direction, it is preferred to bend the laser beam path into a direction parallel to the strip-feed line at least once and then to move the optical system horizontally, after such a bending step, whereby the focus can be moved in a direction parallel to the strip-feed line by the same distance as the amount by which the optical system is moved without moving the focus in the vertical direction and the direction perpendicular to the line. Hence the operation for positioning the focus can be very easily effected.

In the following, other embodiments of optical system adapted to bend the laser beam path to the direction parallel to the line at least once will be explained hereinafter.

In Fig. 23, reference numeral 401 is a first reflector adapted to bend a laser beam 213, incident thereupon in a direction perpendicular to the strip-feed line, into a direction vertical to the strip-feed line reference numeral 402 is a second reflector adapted to bend the laser beam in a direction parallel to the line, and reference numeral 403 is a condensing reflector adapted to focus the laser beam at the weld zone.

Merely by displacing the laser torch 202 in the line direction, the focus is shifted by the same distance as this displacement only in the direction parallel to the line without being shifted in the vertical direction or the direction perpendicular to the line.

The focusing is carried out by moving the reflector 402 and the condensing reflector 403 as one set in a vertical direction.

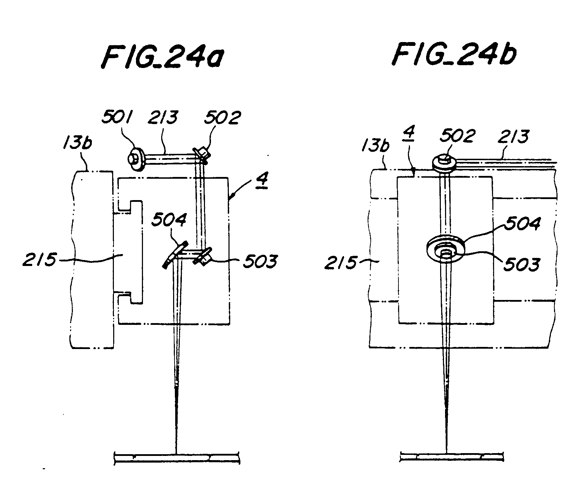

Fig. 24 shows another embodiment using a condensing reflector.

Reference numeral 501 is a first reflector adapted to bend the laser beam 213 incident thereupon in a direction perpendicular to the strip-feed line, into a direction parallel to the line, reference numeral 502 is a second reflector adapted to vertically bend the laser beam, reference numeral 503 is a third reflector adapted to bend the thus vertically bent laser beam into a direction parallel to the line, and reference numeral 504 is a condensing reflector adapted to focus the laser beam at the weld zone.

According to this embodiment, by displacing the condensing reflector 504 in the direction parallel to the line, the focus point is horizontally shifted by the same distance as the displacement of the condenser reflector in the direction parallel to the line without being displaced vertically or in the direction perpendicular to the line.

The focusing is carried out by vertically shifting the reflector 503 and the condensing mirror as one set.
(6) When the welding is completed, the upper clamp members of the inlet and outlet clamps are lifted to release the end portions of the preceding and trailing steel strips, and movement of the welded steel strip can then start.

Subsequently, the cylinder 209 is actuated to lift and return the laser torch to the original position, and the other means are returned to their original locations. Thereby, one weld process is completed.

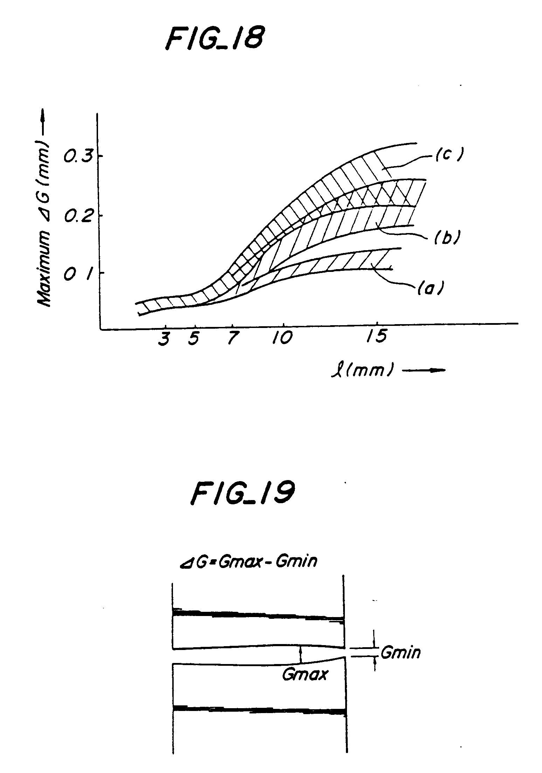

In the above described step (3) for cutting the steel strips, it is particularly important that the cut lines formed by the above cutting operation are parallel to each other and straight for the laser butt welding. That is, when the laser beam is condensed by the condenser, the diameter of the laser beam at the focus is varied according to the focal length of the condenser. For instance, when a condenser having a focal length of 5 inches is used, the diameter is as small as 0.15 mm. Therefore, according to the laser butt welding, it is possible to increase the energy density and to effect high speed welding, but an extremely high precision is required when butting the materials to be welded. If the cut lines of the materials to be welded are curved, a clearance remains even if the butting is effected at a very high precision. In general, when a steel plate is cut by means of a raked shear (guillotine shear, rotary shear or the like), the cut line is more or less curved as shown in Fig. 19 in the transverse direction of the plate. The curved degree of the cut line depends upon the material and the method of clamping, shearing etc., but it is observed that the cut line is curved at about 0.1 mm in the case of a steel plate having a thickness of 1.0-3.0 mm. Thus, even if such curved-edge steel strips are butt-welded, welded joints having satisfactory strength cannot be obtained.

According to the present invention, it is possible to obtain a set of steel strips having parallel and nearly straight cut lines by clamping the edge portions of the steel strips between the upper clamp members 12a and 12b (which are more extended toward the shear zone than the lower clamp members 15a and 15b) and the upper end portion of the lower blade 8. Fig. 18 shows the relationship between the distance I from the edge of the upper clamp member to the side face of the adjacent upper blade and the value AG obtained by subtracting the minimum cut gap (Gmin) from the maximum cut gap (Gmax) (see Fig. 19). Table 1 shows the results obtained when the above described cut edge portions are butted and the butted portion is subjected to laser butt welding.

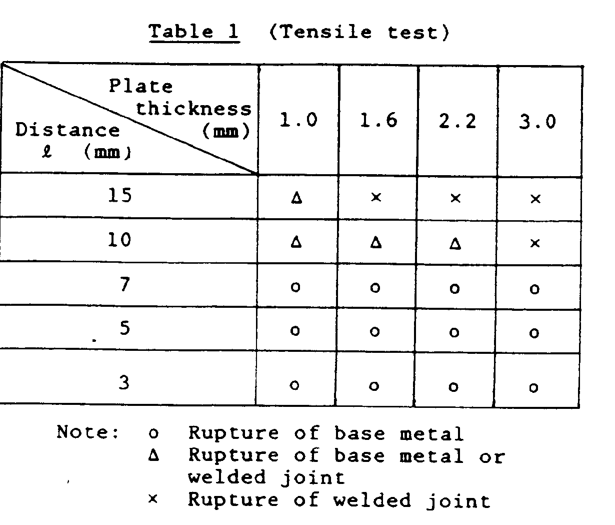

From the above data, it can be seen that excellent welding is possible in a range of I being not more than 7 mm. In a range of 7 < I -- 15, rupture at the welded portion is likely to be caused and there are problem 5 during plate-passing, rolling or other processing steps of the strip. In Fig. 18, the zones (a), (b) and (c) correspond to steel strips having thickness (t) of 1.0 mm, 1.6 mm and 3.0 mm respectively. The welding conditions in the test of Table 1 were: a laser power of 1 kw, the materials were cold-rolled steel strip and hot-rolled steel strip (low carbon steel) and the welding speed was 1.0-3.0 m/min.

In Table 1, the marks (A) mean that the tensile strength when the welded joint portion was ruptured, was about 80-100% of that of the base metal and the mark (x) mean about 40-80% thereof.

Thus, the steel strips of the mark (A) satisfactorily endure the plate-passing in the processing line, while some of the steel strips of the mark (x) (I = 10, t = 3.0 mm) have a tensile strength, they also satisfactory endure the plate-passing in the processing line.

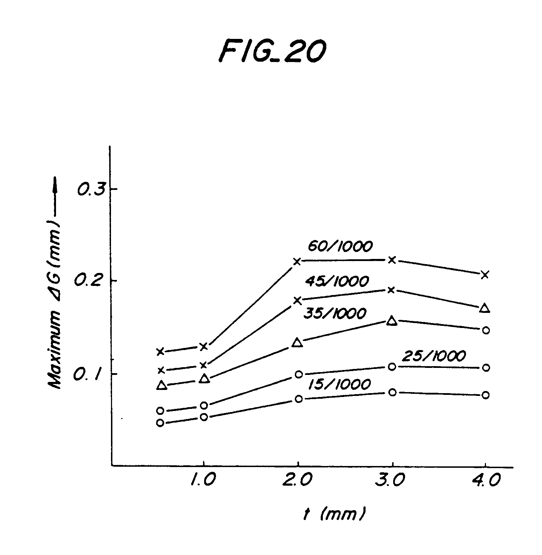

When I cannot be set to be not more than 10 mm for the reason that the extended portion of the upper clamp member interferes with a nozzle portion of the laser torch, the following system is proposed. Fig. 20 shows the relationship between tan a (in which a is the rake angle of the share upper blades) and the above described value AG.

From, these results, it will be understood that the smaller is tan a (a: a rake angle), the smaller is the curve of the cut lines and the better are the welding results. According to the test results it has been found that when the range of the tan a (a: rake angle) is 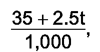 in which-t denotes the thickness of the steel strip, the strength of the joint is high. Fig. 20 is an example when I is 15 mm. In the case of I = 12 mm or 20 mm, similar results were obtained.

Even when I is not more than 10 mm, the curve of the cut line may be more reduced by making the rake angle (tan a) smaller and good welded joints can be reliably obtained.

The smaller is the rake angle (tan a), the smaller is the curve of the cut line, but the shearing-cut force becomes larger with an increase in tan a and hence the frame needs to be stronger and thus the equipment cost is increased.

Therefore, the lower limit for the practical range of tan a is about 4 t/1,000. Thas is, the lower limit is 2.4/1,000 in the case of 0.6 mm in thickness, 12/1,000 in the case of 3 mm in thickness and 18/1,000 in the case of 4.5 mm in thickness.

Next, the use of the station 100 for checking the performance of the optical system will be explained:

The condensing performance of the condenser deteriorates after a long period of use, or if it is broken or damaged due to spattered metal. Therefore, the condenser should be exchanged at a specific time interval or at an irregular time interval. At such a time, the tip portion of the condenser is removed and a fresh one is attached. By this exchanging operation, the welding apparatus is restored to its normal state and becomes useable in the processing line. Usually, the deterioration period of the condensing performance is not constant, and the usable time period is unclear. Further, there is no way to detect the deterioration degree of the condenser other than by means of the difference between the laser power of the laser beam prior to, and after passing through, the condenser or the variation of the depth of penetration of the laser beam. In addition, it is also necessary to check whether the fresh one which is exchanged exhibits a predetermined performance or not. If such checking operations are carried out on the line, the line operation must be stopped during such checking.

For solving the above drawbacks, according to the invention, the station 100 for checking the performance of the optical system is provided at a position located on an extension of the laser torch running line and where the passing of the steel strip is not interrupted so that the checking of the condenser can be carried out while steel strips are passing along the strip-feed line, whereby the productivity is increased.

The station for checking the performances of the optical system is used as follows:

First, the laser means 4 stopped at a predetermined retracted position on the operational side is carried to the station for checking the performances of the optical system by actuating motor 216. Next, the sample plate 103 is placed on the table 101, and secured onto the table by means of press plates 104 and bolts 105. Then, the laser torch is run over the sample plate to irradiate the plate with the laser beam and then the color of the reflected beam and the depth of the weld penetration are checked and it is ascertained whether or not the focus of the condenser is proper and whether the condensing performance has deteriorated or not. This station can be utilized to check whether the distribution of the laser beam energy intensity is proper or not and the deviation of the laser beam axis from the butted line.

Fig. 6(b) is another embodiment of the station for checking the performances of the optical system in which the lower portion of the slit is closed to prevent the penetration or scattering of the laser beam.

The following Table 2 shows a comparison of the welding time of laser butt welding according to the invention with TIG arc welding. The comparison was made with respect to two kinds of steel strips having a thickness of 1.0 mm and 2.3 mm. The laser power was 1.3 kw and the torch-running distance in the laser butt welding and the TIG arc welding was 1.5 m. It will be understood from this table that, with respect to the same thickness of the steel strips, the welding time in the laser butt welding is less than half of that in the TIG arc welding.

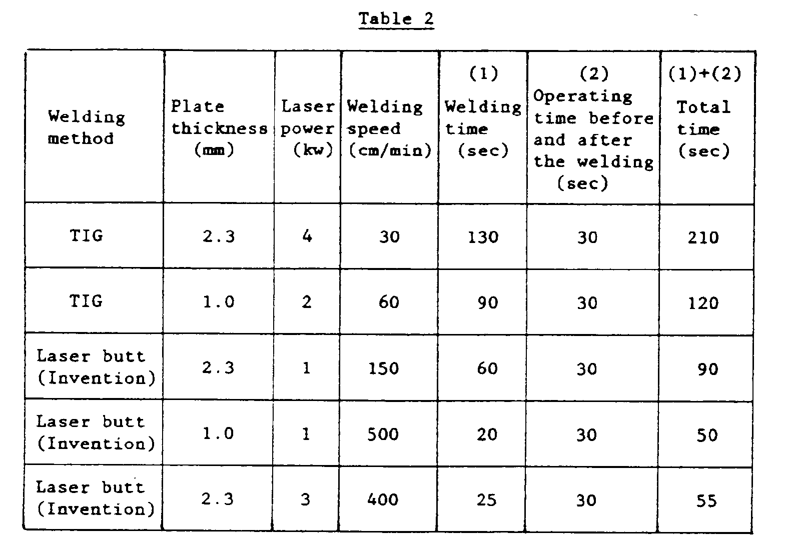

The following Table 3 shows the test results obtained in tensile tests with respect to the welded portions of various steel strips obtained by using the laser butt welding apparatus according to the present invention. The width of the test steel strip was 914-1,067 mm, and five test pieces were cut off in the width direction and the test was made with respect to these test pieces. In all the test pieces, the rupture occurred at the base metal and the welding strength was excellent.

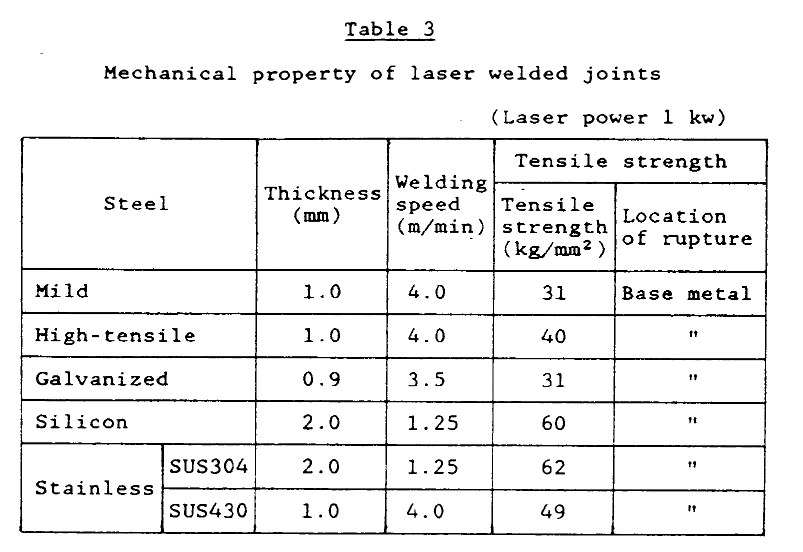

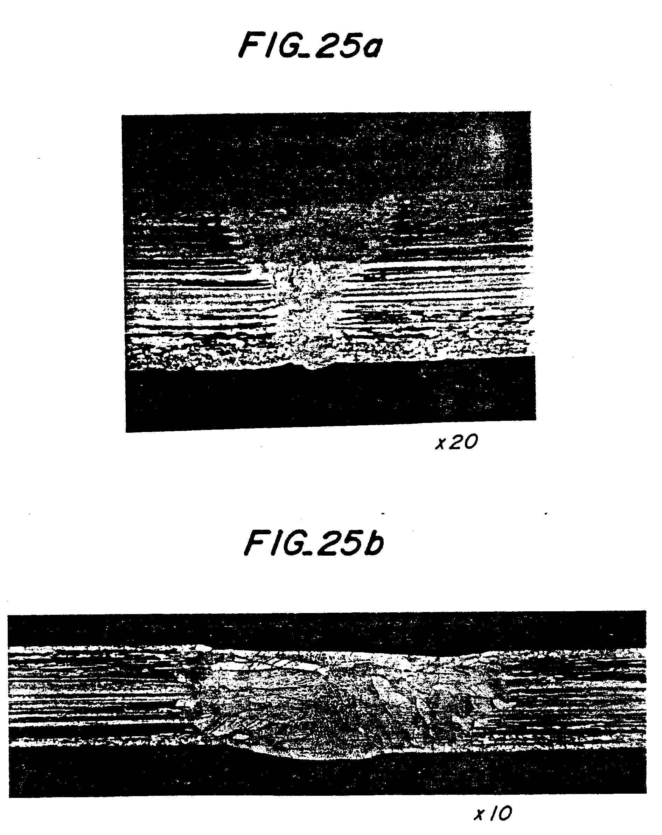

Figs. 25(a) and 25(b) are photographs showing the micro-structure of sections of welded portions in the case of laser butt welding in accordance with the invention and TIG arc welding, respectively. In Fig. 25(a), the thickness of the steel strip was 2.0 mm, the laser power was 1 kw and the welding speed was 1.25 m/min. In Fig. 25(b), the thickness of the steel strip was 2.0 mm, the electric power was 3.8 kw and the welding speed was 0.5 m/min. From the comparison it can be seen that the structure in the case of the laser butt welding was more fine than that of the TIG arc welding and therefore the welding strength is higher in the case of the laser butt welding according to the invention. Further, it can be seen that the profile of the weld portion is less uneven in the laser butt welding than in the TIG arc welding.

The invention can exhibit the following merits:
(1) The welding time can be reduced.
(2) The productivity is higher.
(3) It is possible to weld almost all kinds of steels, for instance, special steels such as silicon steel, stainless steel or the like, plated steels such as galvanized steel sheet or the like, and high tensile strength steels by using the laser butt welding apparatus according to the invention.
(4) Since no bead is formed at the weld portion, the formation of faults caused by coiling can be reduced.
(5) The strength at the welded portions is improved, so that no rupture of the welded portion occurs at the weld line.

## Claims

1. A butt welding apparatus for joining together the tail edge of a preceding steel strip to the front edge of a trailing steel strip without the use of filler wire which apparatus comprises
(i) a clamp means (3) for the end portions of the steel strips and including an inlet clamp (3a) and an outlet clamp (3b) each having an upper clamp member (12a,12b) and a lower damp member (15a,15b), wherein the upper clamp members (12a,12b) extend nearer to each other than the lower clamp members (15a,15b) and wherein one of said inlet and outlet clamps is moveable forward and rearward along the strip feed line and the other is fixed in that direction,
(ii) a cutting means (2) positioned between the inlet and outlet clamps for cutting the end portions of the strips to form the front and tail edges and including a preceding steel strip shear and a trailing steel strip shear each having a lower shearing blade (8) and an upper shearing blade (7),
(iii) a means for butting the front and tail edges of the steel strips while being clamped by means of said clamp means (3), and
(iv) a means of welding the front and tail edges together including a centre clamp (300) adapted to clamp the butted front and tail edges of the steel strips in cooperation with the upper clamp members (12a,12b) during welding characterised in that
(a) the upper shearing blade (7) and the lower shearing blade (8) of each shear are advanceable and retractable in a direction perpendicular to the strip-feed line so as to simultaneously cut the end portions of the preceding and trailing steel strips to form said front and tail edges whilst the end portions of the preceding and trailing steel strips are held between the lower shearing blades (8) and the upper clamp members (12a,12b),
(b) tan a of the upper shearing blades (7), wherein a is the rake angle, is not more than ^{35 + 2.5t.} wherein t is the thickness (mm) of the steel strips, 1000
(c) said moveable clamp constitutes said means for butting the front and tail edges of the steel strips and is moveable along the strip-feed line whilst the centre clamp is arranged to clamp the front and tail edges during butting in cooperation with the upper clamp members to prevent deformation of the front and tail edges,
(d) the welding means includes a laser means (4) (4a) comprising a laser oscillator (1) placed off the strip-feed line, an optical system (211,212,201) (401,402,403) (501,502,503,504) to direct and focus a laser beam (213) irradiated from said laser oscillator on to the weld zone constituted by the butted front and tail edges, and a torch member (202) for applying the laser beam (213) and which is movable transversely of the steel strips, and
(e) the optical system of the laser means (4) (4a) is arranged to cause the laser beam (213) to extend in a direction parallel to the steel strip-feed line at least once on its path to the weld zone from the laser oscillator.

2. An apparatus according to claim 1, wherein the optical system comprises first and second reflectors and a condenser wherein the first reflector (211) receives the laser beam (213) from a direction perpendicular to the strip-feed line and bends it into a direction parallel to the strip-feed line, the second reflector (212) receives the beam from the direction parallel to the strip-feed line and bends it vertically, and the condenser (201) focuses the vertically bent beam on to the weld zone.

3. An apparatus according to claim 1, wherein the optical system comprises first and second reflectors and a condenser wherein the first reflector (401) receives the laser beam (213) from a direction perpendicular to the strip-feed line and bends it vertically, the second reflector (402) receives the vertically bent laser beam and bends it in a direction parallel to the strip-feed line, and the condenser (403) receives the laser beam from the direction parallel to the strip-feed line and focuses it at the weld zone.

4. An apparatus according to claim 1, wherein the optical system comprises first, second and third reflectors and a condenser wherein the first reflector (501) receives the laser beam from a direction perpendicular to the strip-feed line and bends it into a direction parallel to the strip-feed line, the second reflector (502) receives the beam from the direction parallel to the line and bends it vertically, the third reflector (503) receives the thus vertically bent beam and bends it in a direction parallel to the strip-feed line, and the condenser (504) receives the laser beam thus bent in a direction parallel to the strip-feed line and bends it vertically and focuses it on to the weld zone.

5. An apparatus according to any one of claims 1 to 4, wherein the distance between a respective one of said upper clamp members (12a, 12b) and the side edge of the adjacent upper shearing blade (7) is not more than 10 mm.

6. An apparatus according to any one of the preceding claims, which comprises a station (100) adapted for checking the performance of the optical system and located on an extension of the running path of the torch member (202).

7. An apparatus according to any one of the preceding claims wherein the butting means (5) includes provision (33, 34, 35, 15a) for enabling relative pivotal movement of the strips in the plane of the strips to reduce the gap between the front and tail edges of the strips prior to welding.

8. An apparatus according to claim 7 wherein the inlet clamp (3a) is moveable forward and rearward along the strip-feed line and said provision of the butting means comprises a fixed guide member (33, 34) which cooperates with the lower clamp member (15a) of the inlet clamp (3a) via wheels (35) to guide the lower clamp member (15a) as it moves along the strip-feed line.

9. An apparatus according to claim 8 wherein the wheels (35) are mounted on the lower clamp member (15a) and run on the fixed guide member (33, 34), the wheels (35) comprising a forward pair of wheels and a rearward pair of wheels and the fixed guide member (33,34) including recessed portions whereby pivotal movement of the lower clamp member (15a) can occur when the forward pair of wheels reach the recessed portions to cause said relative pivotal movement of the strips in the plane of the strips.

10. An apparatus according to claim 8 wherein the wheels (35) are mounted on the fixed guide member (33,34) and run on the lower clamp member (15a), the wheels (35) comprising a forward pair of wheels and a rearward pair of wheels and the lower clamp member (15a) including recessed portions whereby pivotal movement of the lower clamp member (15a) can occur when the recessed portions reach the rearward pair of wheels to cause said relative pivotal movement of the strips in the plane of the strips.

11. A butt welding apparatus according to any preceding claim wherein the cutting means (2) is mounted on a C-letter shaped frame (6) which, by a drive means (9), can be advanced to, and retracted from, a position between the outlet clamp (3b) and the inlet clamp (3a) in a transverse direction with respect to the steel strip whilst being guided by rails (10).

## Patentansprüche

1. Stumpfschweißvorrichtung zum Verbinden der Hinterkante eines vorlaufenden Stahlbands mit der Vorderkante eines nachfolgenden Stahlbands ohne Verwendung eines Schweißdrahts, umfassend
(i) eine für die Endabschnitte der Stahlbändervorgesehene Spann- oder Klemmeinrichtung (3) mit einer Einlaßklemmeinheit (3a) und einer Auslaßklemmeinheit (3b) mit jeweils einem oberen Klemmelement (12a, 12b) und einem unteren Klemmelement (15a, 15b), wobei die oberen Klemmelemente (12a, 12b) näher aneinander heranreichen als die unteren Klemmelemente (15a, 15b) und eine der Einlaß- und Auslaßklemmeinheiten längs der Stahlbandzuführstrecke vorwärts und rückwärts bewegbar und die andere in dieser Richtung festgelegt ist,
(ii) eine zwischen den Einlaß- und Auslaßklemmeinheiten angeordnete Schneideinrichtung (2) zum Schneiden der Endabschnitte der Stahlbänder zwecks Bildung der Vorder-und Hinterkanten, mit einer Schere für das vorlaufende Stahlband und einer Schere für das nachfolgende Stahlband, wobei die Scheren jeweils eine untere Scherklinge (8) und eine obere Scherklinge (7) aufweisen,
(iii) eine Einrichtung zum stumpfen Zusammenstoßen der Vorder- und Hinterkanten der Stahlbänder, während diese durch die Klemmeinrichtung (3) verspannt sind, und
(iv) eine zum Zusammenschweißen der Vorder- und Hinterkanten dienende Einrichtung mit einer zentralen Klemmeinheit (300), welche während des Schweißvorgangs im Zusammenwirken mit den oberen Klemmelementen (12a, 12b) die zusammenstoßenden Vorder- und Hinterkanten der Stahlbänder einzuklemmen bzw. zu verspannen vermag,
dadurch gekennzeichnet, daß
(a) die obere Scherklinge (7) und die untere Scherklinge (8) jeder Schere in einer Richtung senkrecht zur Stahlbandzuführstraße vorschiebbar und zurückziehbar sind, um die Endabschnitte der vorlaufenden und nachfolgenden Stahlbänderzur Bildung der Vorder- und Hinterkanten gleichzeitig zu schneiden, während die Endabschnitte der vorlaufenden und nachfolgenden Stahlbänder zwischen den unteren Scherklingen (8) und den oberen Klemmelementen (12a, 12b) gehalten sind,
(b) tan a der oberen Scherklingen (7), mit a = Span- oder Schneidwinkel, nicht mehr als ^{35 + 2,5t} 1000 beträgt, mit t = Dicke (mm) der Stahlbänder,
(c) die bewegbare Klemmeinrichtung die Einrichtung zum Zusammenstoßen der Vorder- und Hinterkanten der Stahlbänder bildet und längs der Bandzuführstrecke bewegbar ist, während die zentrale Klemmeinheit angeordnet ist zum Verklemmen der Vorder- und Hinterkanten während des Zusammenstoßens im Zusammenwirken mit den oberen Klemmelementen zwecks Verhinderung einer Verformung der Vorder- und Hinterkanten,
(d) die Schweißeinrichtung eine Lasereinrichtung (4; 4a) mit einem gegenüber der Stahlbandzuführstraße versetzten Laseroszillator (1), einem optischen System (211, 212, 201; 401, 402, 403; 501, 502, 503, 504) zum Richten und Fokussieren (Bündeln) eines vom Laseroszillator ausgestrahlten Laserstrahls (213) auf die durch die stumpf zusammenstoßenden Vorder- und Hinterkanten gebildete Schweißzone, sowie einem quer zu den Stahlbändern bewegbaren (Schweiß-)Brennerelement (202) zum Einwirkenlassen des Laserstrahls (213) umfaßt, und
(e) das optische System der Lasereinrichtung (4; 4a) angeordnet ist, um den Laserstrahl (213) sich mindestens einmal auf seiner Strecke zur Schweißzone vom Laseroszillator in einer Richtung parallel zur Stahlbandzuführstraße erstrekken oder bewegen zu lassen.

2. Vorrichtung nach Anspruch 1,
dadurch gekennzeichnet, daß
das optische System erste und zweite Reflektoren und einen Kondensor umfaßt, wobei dererste Reflektor (211) den Laserstrahl (213) aus einer Richtung senkrecht zur Stahl bandzufü hrstraße abnimmt und ihn in einer Richtung parallel zur Stahlbandzuführstraße umlenkt, der zweite Reflektor (212) den Strahl aus der Richtung parallel zur Stahlbandzuführstraße abnimmt und ihn lotrecht umlenkt und der Kondensor (201) den lotrecht umgelenkten Strahl auf die Schweißzone fokussiert.

3. Vorrichtung nach Anspruch 1,
dadurch gekennzeichnet,
daß das optische System erste und zweite Reflektoren und einen Kondensor umfaßt, wobei der erste Reflektor (401 ) den Laserstrahl (213) aus einer Richtung senkrecht zur Stahlbandzuführstraße abnimmt und ihn lotrecht umlenkt, der zweite Reflektor (402) den lotrecht umgelenkten Laserstrahl abnimmt und ihn in einer Richtung parallel zur Stahlbandzuführstraße umlenkt und der Kondensor (403) den Laserstrahl aus der Richtung parallel zur Stahlbandzuführstraße abnimmt und ihn an der Schweißzone fokussiert.

4. Vorrichtung nach Anspruch 1,
dadurch gekennzeichnet,
daß das optische System erste, zweite und dritte Reflektoren und einen Kondensor umfaßt, wobei der erste Reflektor (501) den Laserstrahl aus einer Richtung senkrecht zur Stahlbandzuführstraße abnimmt und ihn in einer Richtung parallel zur Stahlbandzuführstraße umlenkt, der zweite Reflektor (502) den Strahl aus der Richtung parallel zur Stahlbandzuführstraße abnimmt und ihn lotrecht umlenkt, der dritte Reflektor (503) den so lotrecht umgelenkten Strahl abnimmt und ihn in einer Richtung parallel zur Stahlbandzuführstraße umlenkt und der Kondensor (504) den so in einer Richtung parallel zur Stahlbandzuführstraße umgelenkten Laserstrahl abnimmt und ihn lotrecht umlenkt und auf die Schweißzone fokussiert.

5. Vorrichtung nach einem der Ansprüche 1 bis 4,
dadurch gekennzeichnet,
daß der Abstand zwischen einem betreffenden der oberen Klemmelemente (12a, 12b) und der Seitenkante der benachbarten oberen Scherklinge (7) nicht mehr als 10 mm beträgt.

6. Vorrichtung nach einem der vorangehenden Ansprüche,
gekennzeichnet durch
eine Station (100), welche die Leistung oder Arbeitsweise des optischen Systems zu überprüfen vermag und die auf einer Verlängerung der Laufstrecke des Brennerelements (202) angeordnet ist.

7. Vorrichtung nach einem der vorangehenden Ansprüche,
dadurch gekennzeichnet,
daß die Zusammenstoßeinrichtung (5) eine Anordnung (33, 34, 35, 15a) zur Ermöglichung einer relativen Schwenkbewegung der Stahlbänder in deren Ebene umfaßt, um den Spalt oder Abstand zwischen den Vorder- und Hinterkanten der Stahlbänder vor dem Schweißen zu verkleinern.

8. Vorrichtung nach Anspruch 7,
dadurch gekennzeichnet,
daß die Einlaßklemmeinheit (3a) vorwärts und rückwärts längs der Stahlbandzuführstraße bewegbar ist und die Anordnung der Zusammenstoßeinrichtung ein feststehendes Führungselement (33, 34) aufweist, das mit dem unteren Klemmelement (15a) der Einlaßklemmeinheit (3a) über Räder (35) zusammenwirkt, um das untere Klemmelement (15a) bei seiner Bewegung längs der Stahlbandzuführstraße zu führen.

9. Vorrichtung nach Anspruch 8,
dadurch gekennzeichnet,
daß die Räder (35) am unteren Klemmelement (15a) gelagert sind und auf dem feststehenden Führungselement (33, 34) ablaufen, die Räder (35) ein vorderes Räderpaar und ein hinteres Räderpaar umfassen und das feststehende Führungselement (33, 34) ausgesparte Abschnitte aufweist, so daß eine Schwenkbewegung des unteren Klemmelements (15a) stattfinden kann, wenn das vordere Räderpaar die ausgesparten Abschnitte erreicht, um die relative Schwenkbewegung der Stahlbänder in deren Ebene hervorzubringen.

10. Vorrichtung nach Anspruch 8,
dadurch gekennzeichnet,
daß die Räder (35) am feststehenden Führungselement (33, 34) gelagert sind und auf dem unteren Klemmelement (15a) ablaufen, die Räder (35) ein vorderes Räderpaar und ein hinteres Räderpaar umfassen und das untere Klemmelement (15a) ausgesparte Abschnitte aufweist, so daß eine Schwenkbewegung des unteren Klemmelements (15a) stattfinden kann, wenn die ausgesparten Abschnitte das hintere Räderpaar erreichen, um die relative Schwenkbewegung der Stahlbänder in deren Ebene hervorzubringen.

11. Stumpfschweißvorrichtung nach einem der vorangehenden Ansprüche,
dadurch gekennzeichnet,
daß die Schneideinrichtung (2) an einem C-förmigen Rahmen (6) montiert ist, der mittels einer Antriebseinrichtung (9) in einer Querrichtung gegenüber dem Stahlband, während er durch Schienen (10) geführt ist, zu einer Stellung zwischen der Auslaßklemmeinheit (3b) und der Einlaßklemmeinheit (3a) vorschiebbar und aus dieser Stellung zurückziehbar ist.

## Revendications

1. Appareil de soudage bout à bout destiné au raccordement du bord postérieur d'une bande précédente d'acier au bord antérieur d'une bande suivante d'acier sans utilisation d'un fil de remplissage, l'appareil comprenant :
(i) un dispositif de serrage (3) des parties d'extrémité des bandes d'acier, comprenant une pince d'entrée (3a) et une pince de sortie (3b), chacune ayant un organe supérieur (12a, 12b) de serrage et un organe inférieur (15a, 15b) de serrage, des organes supérieurs (12a, 12b) de serrage étant plus proches l'un de l'autre que les organes inférieurs de serrage (15a, 15b), et l'une des pinces d'entrée et de sortie est mobile vers l'avant et vers l'arrière le long de l'axe d'avance de la bande et l'autre est fixe dans cette direction,
(ii) un dispositif (2) de coupe, placé entre les pinces d'entrée et de sortie et destiné à couper les parties d'extrémité des bandes afin qu'il forme les bords antérieur et postérieur et comprenant une cisaille de la bande précédente et une cisaille de la bande suivante, chaque cisaille ayant une lame inférieure (8) et une lame supérieure (7) de cisaillage,
(iii) un dispositif de mise bout à bout des bords antérieur et postérieur des bandes d'acier lorsqu'elles sont serrées par le dispositif de serrage (3), et
(iv) un dispositif de soudage des bords antérieur et postérieur l'un sur l'autre, comprenant une pince centrale (300) destinée à serrer les bords antérieur et postérieur en butée des bandes d'acier en coopération avec les organes supérieurs de serrage (12a, 12b) pendant le soudage,
caractérisé en ce que
(a) la lame supérieure (7) et la lame inférieure (8) de cisaillage de chaque cisaille peuvent avancer et reculer en direction perpendiculaire à l'axe d'avance des bandes afin qu'elles coupent simultanément les parties d'extrémité de la bande précédente et de la bande suivante et forment les bords antérieur et postérieur, alors que les parties d'extrémité des bandes précédente et suivante sont maintenues entre les lames inférieures (8) de cisaillage et les organes supérieurs (12a, 12b) de serrage,
(b) tga des lames supérieures (7) de cisaillage, a étant l'angle de tranchant, ne dépasse pas (35 + 2,5t)/1 000, t étant l'épaisseur (en millimètres) des bandes d'acier,
(c) la pince mobile constitue le dispositif de mise en butée des bords antérieur et postérieur des bandes d'acier et est mobile suivant l'axe d'avance des bandes, alors que la pince centrale est destinée à serrer les bords antérieur et postérieur pendant la mise en butée en coopération avec les organes supérieur de serrage afin que les bords antérieur et postérieur ne se déforment pas,
(d) le dispositif de soudage comporte un dispositif à laser (4) (4a) qui comporte un oscillateur laser (1) disposé en dehors de l'axe d'avance des bandes, un système optique (211,212,201) (401,402, 403) (501, 502, 503, 504) destiné à diriger et focaliser un faisceau laser (213) provenant de l'oscillateur laser sur la zone de soudage constituée par les bords antérieur et postérieur en butée, et un organe à chalumeau (202) destiné à appliquer le faisceau laser (213) et mobile transversalement aux bandes d'acier, et
(e) le système optique du dispositif à laser (4) (4a) est disposé de manière qu'il provoque la disposition du faisceau laser (213) en direction parallèle à l'axe d'avance des bandes d'acier au moins une fois dans son trajet vers la zone de soudage à partir de l'oscillateur laser.

2. Appareil selon la revendication 1, dans lequel le système optique comprend un premier et un second ré- flecteuret un condenseur, dans lequel le premier réflecteur (211) reçoit le faisceau laser (213) en direction perpendiculaire à l'axe d'avance des bandes et le renvoie en direction parallèle à l'axe d'avance des bandes, le second réflecteur (212) reçoit le faisceau en direction parallèle à l'axe d'avance des bandes et le renvoie verticalement, et le condenseur (201) focalise le faisceau renvoyé verticalement sur la zone de soudage.

3. Appareil selon la revendication 1, dans lequel le système optique comprend un premier et un second réflecteur et un condenseur, dans lequel le premier réflecteur (401) reçoit le faisceau laser (213) d'une direction perpendiculaire à l'axe d'avance des bandes et les renvoie verticalement, le second réflecteur (402) reçoit le faisceau laser renvoyé verticalement et le renvoie en direction parallèle à l'axe d'avance des bandes, et le condenseur (403) reçoit le faisceau laser de la direction parallèle à l'axe d'avance des bandes et le focalise sur la zone de soudage.

4. Appareil selon la revendication 1, dans lequel le système optique comprend un premier, un second et un troisième réflecteur et un condenseur, dans lequel le premier réflecteur (501) reçoit le faisceau laser d'une direction perpendiculaire à l'axe d'avance des bandes et le renvoie en direction parallèle à l'axe d'avance des bandes, le second réflecteur (502) reçoit le faisceau de la direction parallèle à l'axe et le renvoie verticalement, le troisième réflecteur (503) reçoit le faisceau ainsi renvoyé verticalement et le renvoie en direction parallèle à l'axe d'avance des bandes, et le condenseur (504) reçoit le faisceau laser ainsi renvoyé en direction parallèle à l'axe d'avance des bandes et le renvoie verticalement et le focalise sur la zone de soudage.

5. Appareil selon l'une quelconque des revendications 1 à 4, dans lequel la distance comprise entre un organe supérieur respectif de serrage (12a, 12b) et le bord latéral de la lame supérieure adjacente (7) de cisaillage ne dépasse pas 10 mm.

6. Appareil selon l'une quelconque des revendications précédentes, comprenant un poste (100) destiné à la vérification des performances du système optique, placé sur un prolongement du trajet de déplacement de l'organe à chalumeau (202).

7. Appareil selon l'une quelconque des revendications précédentes, dans lequel le dispositif de mise bout à bout (5) comporte une disposition (33, 34, 35, 15a) permettant un mouvement relatif de pivotement des bandes dans le plan des bandes afin que l'espace compris entre les bords antérieur et postérieur des bandes soit réduit avant le soudage.

8. Appareil selon la revendication 7, dans lequel la pince d'entrée (3a) est mobile vers l'avant et vers l'arrière suivant l'axe d'avance des bandes, et la disposition du dispositif de mise en butée comporte un organe fixe (33, 34) de guidage qui coopère avec l'organe inférieur (15a) de serrage de la pince d'entrée (3a) par l'intermédiaire de roues (35) destinées à guider l'organe inférieur (15a) de serrage lorsqu'il se déplace le long de l'axe d'avance des bandes.

9. Appareil selon la revendication 8, dans lequel les roues (35) sont montées sur l'organe inférieur (15a) de serrage et se déplacent sur l'organe fixe de guidage (33, 34), les roues (35) comprenant une paire de roues avant et une paire de roues arrière et l'organe fixe de guidage (33, 34) comprenant des parties évidées si bien que le pivotement de l'organe inférieur (15a) de serrage peut être réalisé lorsque la paire de roues avant atteint les parties évidées afin qu'un certain pivotement relatif des bandes soit provoqué dans le plan des bandes.

10. Appareil selon la revendication 8, dans lequel les roues (35) sont montées sur l'organe fixe de guidage (33, 34) et se déplacent sur l'organe inférieur (15a) de serrage, les roues (35) comprenant une paire de roues avant et une paire de roues arrière, et l'organe inférieur (15a) de serrage comprenant des parties évidées si bien qu'un mouvement de pivotement de l'organe inférieur (15a) de serrage peut être réalisé lorsque les parties évidées atteignent la paire de roues arrière, avec pivotement relatif des bandes dans le plan de ces bandes.

11. Appareil selon l'une quelconque des revendications précédentes, dans lequel le dispositif de coupe (2) est monté sur un châssis (6) ayant la forme de la lettre C et qui peut avancer et reculer, sous la commande d'un dispositif (9) d'entraînement, par rapport à une position comprise entre la pince de sortie (3b) et la pince d'entrée (3a) en direction transversale) à la bande d'acier tout en étant guidé par des rails (10).
